# EUROPÄISCHE PATENTANMELDUNG

(11) **EP 1 148 284 A1**
(43) Veröffentlichungstag der Anmeldung: **24.10.2001**
(21) Anmeldenummer: 01810248.3
(22) Anmeldetag: 12.03.2001
(51) Int. Cl.: F16L 27/053, F16L 27/08

(54) **Rohrverbindungsgelenk**

(30) Priorität: 18.04.2000 CH 7772000
(71) Anmelder: Von Roll Holding AG, 4563 Gerlafingen (CH)
(72) Erfinder: Schmassmann, Christian, 2827 Mervelier (CH); Galvanetto, François, 2942 Alle (CH)
(74) Vertreter: Bollhalder, Renato

(57) **Zusammenfassung**

Ein Rohrverbindungselement umfasst zwei Rohranschlüsse (11, 21), die je an einem Gelenkteil (1, 2) mit einem gebogenen Gelenkwandbereich (15, 25) angeordnet sind. Der gebogene Gelenkwandbereich (15, 25) des einen Gelenkteils (1, 2) und der gebogene Gelenkwandbereich (15, 25) des anderen Gelenkteils (1, 2) sind teilweise ineinander gegeneinander drehbar angeordnet. Zwischen ihnen ist eine Dichtung (3) vorhanden, die den Übergang vom einen Gelenkteil (1, 2) zum anderen nach aussen abdichtet. Dadurch, dass die beiden Gelenkteile (1, 2) gegeneinander drehbar sind, ist der Winkel zwischen den beiden an ihnen angeordneten Rohranschlüssen (11, 21) verstellbar. Dasselbe Rohrverbindungselement kann so zur Verbindung von Rohren verwendet werden, die miteinander einen in einem gewissen Rahmen stufenlos einstellbaren Winkel einschliessen.

## Beschreibung

Die vorliegende Erfindung bezieht sich auf ein Rohrverbindungselement mit mindestens zwei Rohranschlüssen.

Rohrverbindungselemente mit zwei oder mehr Rohranschlüssen werden dazu eingesetzt, um zwei oder mehr Rohre in einem Winkel zueinander zu verbinden. Dabei ist es insbesondere bei Druckrohren für den Flüssigkeitstransport im allgemeinen notwendig, dass das Rohrverbindungselement und die Verbindungen zu den Rohren dicht sind, so dass keine Flüssigkeit austreten kann. Herkömmliche Rohrverbindungselemente sind einstückig ausgebildet, z.B. gegossen, so dass normalerweise nur noch die Dichtheit der Verbindungen zu den Rohren problematisch ist. Die gewünschte Dichtheit kann beispielsweise mit bekannten Steckmuffen-Spitzendverbindungen oder Flanschverbindungen erreicht werden.

Die bisherigen einstückigen Rohrverbindungselemente haben den Nachteil, dass sie jeweils gerade einen bestimmten Winkel für die Rohre vorgeben. Für unterschiedliche Winkel zwischen den Rohren müssen daher unterschiedliche Rohrverbindungselemente eingesetzt werden, was insbesondere die Herstellung und die Lagerhaltung aufwendig macht. Ausserdem wird durch die starren Rohrverbindungselemente auch die Installation der Rohre vor Ort erschwert, da der Winkel zwischen zwei Rohren nicht der jeweiligen Situation angepasst kurzfristig gewählt werden kann oder dann eine Vielzahl von unterschiedlichen Rohrverbindungselementen mitgeführt werden müssen.

Angesichts der Nachteile der bisher bekannten, oben beschriebenen Rohrverbindungselemente liegt der Erfindung die folgende Aufgabe zugrunde. Zu schaffen ist ein Rohrverbindungselement der eingangs erwähnten Art, das eine einfachere Lagerhaltung und Installation vor Ort ermöglicht.

Diese Aufgabe wird durch das erfindungsgemässe Rohrverbindungselement gelöst, wie es im unabhängigen Patentanspruch 1 definiert ist. Bevorzugte Ausführungsvarianten ergeben sich aus den abhängigen Patentansprüchen.

Das Wesen der Erfindung besteht darin, dass ein Rohrverbindungselement mit mindestens zwei Rohranschlüssen zwei Gelenkteile mit jeweils einem gebogenen Gelenkwandbereich aufweist und an jedem Gelenkteil mindestens einer der Rohranschlüsse angeordnet ist. Der gebogene Gelenkwandbereich des einen Gelenkteils und der gebogene Gelenkwandbereich des anderen Gelenkteils sind teilweise ineinander gegeneinander drehbar angeordnet. Zwischen ihnen ist eine Dichtung vorhanden, die den Übergang vom einen Gelenkteil zum anderen nach aussen abdichtet.

Dadurch, dass die beiden gebogenen Gelenkwandbereiche und somit die ganzen Gelenkteile gegeneinander drehbar sind, ist der Winkel zwischen den an diesen angeordneten Rohranschlüssen verstellbar. Dasselbe Rohrverbindungselement kann so zur Verbindung von Rohren verwendet werden, die miteinander einen in einem gewissen Rahmen stufenlos einstellbaren Winkel einschliessen. Dies vereinfacht unter anderem die Installation der Rohre vor Ort. Dank des erfindungsgemässen, flexibel einsetzbaren Rohrverbindungselements muss nicht mehr eine Vielzahl unterschiedlicher Rohrverbindungselemente hergestellt, gelagert und eventuell sogar noch zum Installationsort transportiert werden. Die Dichtheit des Rohrverbindungselements in jeder möglichen Drehstellung wird durch die zwischen den beiden gebogenen Gelenkwandbereiche der Gelenkteile vorhandene Dichtung gewährleistet.

Bei einer bevorzugten Ausführungsvariante sind die beiden Gelenkteile drehbar miteinander verbunden, vorzugsweise verschraubt. Dies kann beispielsweise mittels pro Schraube einer normalen Schraubenhalterung am einen Gelenkteil und einer langlochartigen, gebogenen Schraubenhalterung am anderen Gelenkteil erreicht werden, wobei mit Vorteil zwei Schraubverbindungen symmetrisch angeordnet sind und die Schrauben nicht voll angezogen werden. Beim Drehen des einen Gelenkteils werden so die Schrauben und die entsprechenden langlochartigen, gebogenen Schraubenhalterungen gegeneinander gedreht.

Bei einer anderen vorteilhaften Ausführungsvariante ist das eine Gelenkteil zwischen dem anderen Gelenkteil und einem Befestigungsteil drehbar gehalten. Das Befestigungsteil ist mit Vorteil mit einem der beiden Gelenkteile fest verbunden, vorzugsweise verschraubt. Dies ermöglicht es, den gebogenen Gelenkwandbereich des inneren der Gelenkteile derart sphärisch auszugestalten, dass er sich über mehr als eine Kugelhälfte erstreckt, und den gebogenen Gelenkwandbereich des äusseren der Gelenkteile derart sphärisch, dass er sich höchstens über eine Kugelhälfte erstreckt, so dass das innere Gelenkteil in das äussere Gelenkteil einführbar und mit dem Befestigungsteil, der mit dem äusseren Gelenkteil verbindbar ist, drehbar befestigbar ist. Auf diese Weise kann ein ausreichend grosser maximaler Drehwinkel, vorzugsweise mindestens 45°, erreicht werden.

Vorteilhafterweise sind die gebogenen Gelenkwandbereiche der beiden Gelenkteile derart ausgebildet, dass sie ein gegeneinander Drehen der beiden Gelenkteile nur in einer Richtung und ihrer Gegenrichtung zulassen, oder weist als Alternative das erfindungsgemässe Rohrverbindungselement Mittel auf, die ein gegeneinander Drehen der beiden Gelenkteile nur in einer Richtung und ihrer Gegenrichtung zulassen, wobei diese Mittel vorzugsweise eine Nut und eine Feder umfassen, wobei die Nut am einen Gelenkteil oder am Befestigungsteil und die Feder am anderen Gelenkteil oder am Befestigungsteil angeordnet ist und die Feder in die Nut eingreift. Dadurch kann mit einem einfachen Dichtring als Dichtung sichergestellt werden, dass der Übergang vom einen Gelenkteil zum anderen nach aussen dicht ist.

Bei einer bevorzugten Ausführungsvariante sind die beiden Gelenkteile derart ausgebildet, dass in jeder möglichen Drehstellung jeweils der ganze Öffnungsquerschnitt der Rohranschlüsse offen ist. Dies gewährleistet einen optimalen Flüssigkeitsdurchlass für jeden einstellbaren Winkel.

Mit Vorteil sind die beiden Gelenkteile so ausgebildet und teilweise ineinander angeordnet, dass sie um mindestens 30°, vorzugsweise mindestens 45°, gegeneinander drehbar sind. Dies kann durch Vorsehen einer genügend grossen und geeignet angeordneten Überdeckungsfläche der gebogenen Gelenkwandbereiche der beiden Gelenkteile und allenfalls des Befestigungsteils erreicht werden.

Im folgenden wird das erfindungsgemässe Rohrverbindungselement unter Bezugnahme auf die beigefügten Zeichnungen anhand von vier Ausführungsbeispielen detaillierter beschrieben. Es zeigen:
- Fig. 1 -: eine Schnittansicht eines ersten Ausführungsbeispiels des erfindungsgemässen Rohrverbindungselements mit zwei maximal gegeneinander gedrehten Gelenkteilen mit sphärisch gebogenen Gelenkwandbereichen und zwei Rohranschlüssen in Form von Steckmuffen;
- Fig. 2 -: das Rohrverbindungselement von Fig. 1 mit den beiden Gelenkteilen in der Ausgangsstellung, in der sie nicht gegeneinander gedreht sind;
- Fig. 3 -: eine Detailansicht eines der Gelenkteile und eines Befestigungsteils gemäss der Linie A-A in Fig. 1;
- Fig. 4 -: eine Seitenansicht des Rohrverbindungselements von Fig. 2;
- Fig. 5 -: eine Seitenansicht des inneren Gelenkteils von Fig. 1 ohne Rohranschluss;
- Fig. 6 -: einzelne Teile des Rohrverbindungselements von Fig. 1 in einer Explosionsdarstellung;
- Fig. 7 -: eine Schnittansicht eines zweiten Ausführungsbeispiels des erfindungsgemässen Rohrverbindungselements mit einem Rohranschluss in Form einer Steckmuffe und einem Rohranschluss in Form eines Flanschanschlusses;
- Fig. 8 -: eine Schnittansicht eines dritten Ausführungsbeispiels des erfindungsgemässen Rohrverbindungselements mit einem Rohranschluss in Form einer Steckmuffe und einem Rohranschluss in Form eines Spitzendes;
- Fig. 9 -: eine Schnittansicht eines vierten Ausführungsbeispiels des erfindungsgemässen Rohrverbindungselements mit zwei maximal gegeneinander gedrehten Gelenkteilen mit ovalen gebogenen Gelenkwandbereichen;
- Fig. 10 -: das Rohrverbindungselement von Fig. 9 mit den beiden Gelenkteilen in der Ausgangsstellung, in der sie nicht gegeneinander gedreht sind;
- Fig. 11 -: eine Schnittansicht des Rohrverbindungselements von Fig. 10 gemäss der Linie B-B in Fig. 10, wobei der Schnitt so gelegt ist, dass auf der einen Seite eine normale Schraubenhalterung am einen Gelenkteil und auf der anderen Seite eine langlochartige, gebogene Schraubenhalterung am anderen Gelenkteil sichtbar ist;
- Fig. 12 -: eine Seitenansicht eines Schraubverbindungsbereichs des Rohrverbindungselements von Fig. 11;
- Fig. 13 -: eine Schnittansicht gemäss der Linie D-D in Fig. 11 eines Schraubverbindungsbereichs des Rohrverbindungselements;
- Fig. 14 -: einzelne Teile des Rohrverbindungselements von Fig. 9 in einer Explosionsdarstellung und
- Fig. 15 -: eine Schnittansicht eines fünften Ausführungsbeispiels des erfindungsgemässen Rohrverbindungselements mit einem Gelenkteil mit zwei Rohranschlüssen und einem Gelenkteil mit einem Rohranschluss.

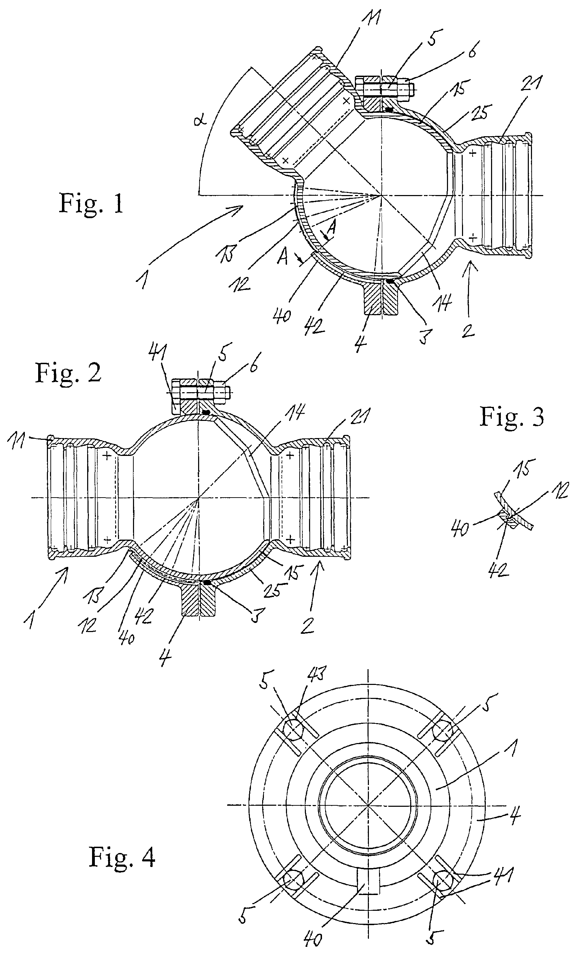

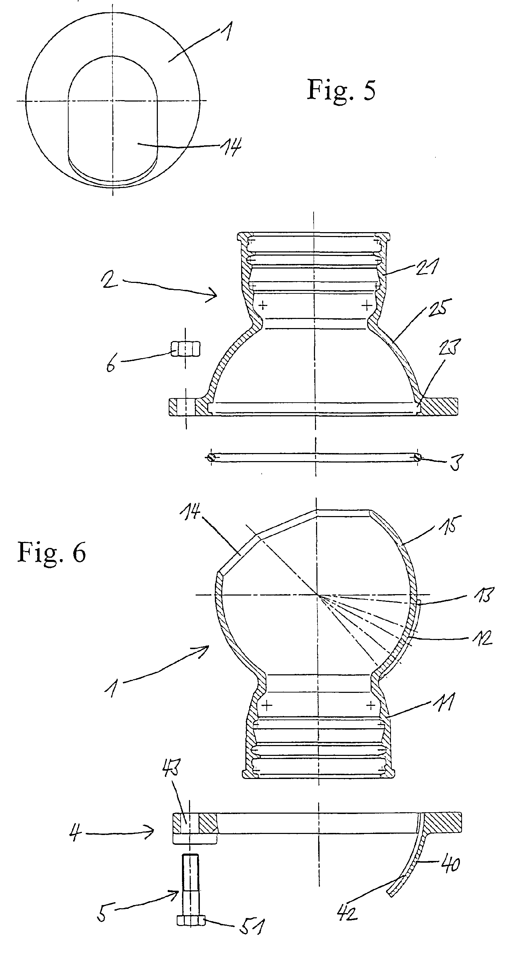

### Erstes Ausführungsbeispiel - Figuren 1 bis 6

Bei diesem ersten Ausführungsbeispiel umfasst das erfindungsgemässe Rohrverbindungselement zwei Gelenkteile 1 und 2 mit sphärisch gebogenen Gelenkwandbereichen 15, 25, die teilweise ineinander gegeneinander drehbar angeordnet sind. Der gebogene Gelenkwandbereich 15 des inneren Gelenkteils 1 erstreckt sich über mehr als eine Kugelhälfte, während der gebogene Gelenkwandbereich 25 des äusseren Gelenkteils 2 sich nur über eine Kugelhälfte erstreckt. Dadurch kann das innere Gelenkteil 1 in das äussere Gelenkteil 2 eingeführt werden. Nach dem Einführen des inneren Gelenkteils 1 wird ein Befestigungsteil 4, das sich aus einem bogenförmigen Bereich 40 und einem Flansch zusammensetzt, mittels vierer Schrauben 5 an das äussere Gelenkteil geschraubt, so dass das innere Gelenkteil 1 zwischen dem äusseren Gelenkteil 2 und dem Befestigungsteil 4 drehbar gehalten ist.

Um das Verschrauben des Befestigungsteils 4 mit dem äusseren Gelenkteil 2 mit nur einem Schraubenschlüssel zu ermöglichen, sind am Befestigungsteil 4 neben jedem Schraubenloch 43 jeweils zwei Halteplatten 41 angeordnet, zwischen denen der Kopf 51 der jeweiligen Schraube 5 derart gehalten ist, dass sich die Schraube 5 beim Aufschrauben der zugehörigen Schraubenmutter 6 nicht dreht.

An den beiden Gelenkteilen 1, 2 ist jeweils ein Rohranschluss 11 bzw. 21 in Form einer Steckmuffe angeordnet. In diese Steckmuffen 11, 21 ist jeweils ein Spitzende eines Rohres steckbar, wobei im allgemeinen zwischen Steckmuffe 11, 21 und Spitzende ringförmige Dicht- und Halteelemente angeordnet werden. Zwei Rohre können so dicht an das Rohrverbindungselement angeschlossen werden.

Zur Abdichtung des Übergangs vom einen Gelenkteil 1, 2 zum anderen nach aussen ist zwischen den gebogenen Gelenkwandbereichen 15, 25 der beiden Gelenkteile 1, 2 ein Dichtring 3, vorzugsweise aus Kautschuk, vorhanden, der um den gebogenen Gelenkwandbereich 15 des inneren Gelenkteils 1 herum in einer Ringnut 23 des gebogenen Gelenkwandbereichs 25 des äusseren Gelenkteils 2 gelagert ist. Der Dichtring 3 gewährleistet die Dichtheit des Rohrverbindungselements in jeder möglichen Drehstellung der beiden Gelenkteile 1, 2.

Um die Dichtheit und einen ausreichenden Flussquerschnitt des Rohrverbindungselements in jeder Drehstellung sicherstellen zu können, werden die Drehmöglichkeiten eingeschränkt. Hierzu dienen eine Nut 42 auf der Innenseite des bogenförmigen Bereichs 40 des Befestigungsteils 4 und eine Feder 12 auf der Aussenseite des gebogenen Gelenkwandbereichs 15 des Gelenkteils 1. Die Feder 12 greift in die Nut 42 ein und erlaubt so nur ein Drehen in einer Richtung und ihrer Gegenrichtung. Der Drehwinkel α ist beschränkt durch das Anschlagen des Rohranschlusses 11 am Befestigungsteil 4. In Fig. 1 ist der maximale Drehwinkel α von 45° dargestellt, während der Drehwinkel α bei der in Fig. 2 dargestellten Drehstellung 0° beträgt.

Der Gelenkteil 1 weist eine dem Rohranschluss 21 des Gelenkteils 2 zugewandte Öffnung 14 auf, die derart ausgebildet ist, dass in jeder möglichen Drehstellung jeweils der ganze Öffnungsquerschnitt des Rohranschlusses 21 offen ist und gleichzeitig die Dichtheit des Rohrverbindungselements gewährleistet ist.

Zur Erleichterung der Installation der Rohre und des Rohrverbindungselements vor Ort ist auf dem gebogenen Gelenkwandbereich 15 des Gelenkteils 1 eine Skala 13 angebracht, die je nach Drehstellung vom bogenförmigen Bereich 40 des Befestigungsteils 4 unterschiedlich abgedeckt wird. Auf diese Weise kann der Drehwinkel α direkt abgelesen oder voreingestellt werden.

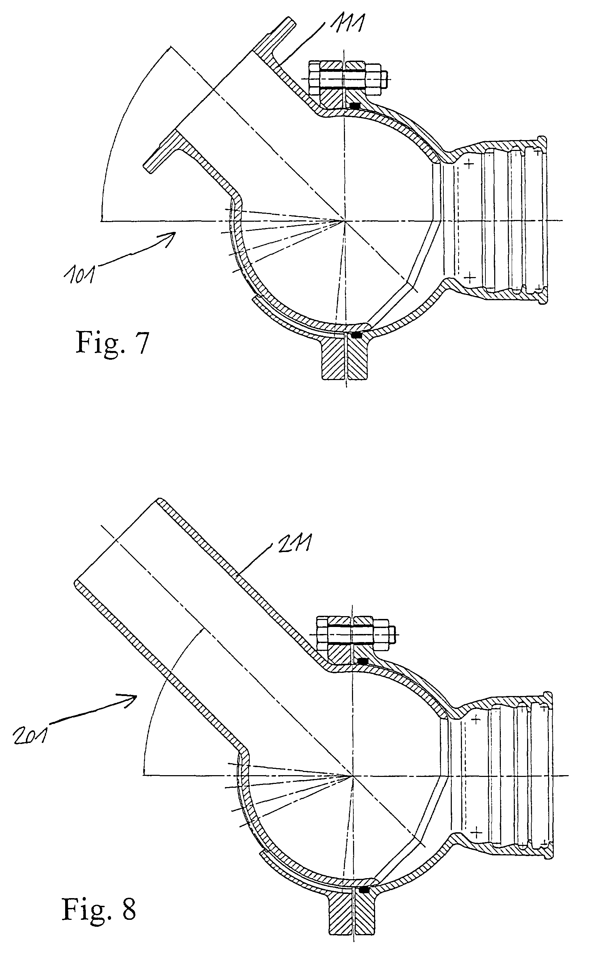

### Zweites Ausführungsbeispiel - Figur 7

Bei diesem zweiten Ausführungsbeispiel weist das Gelenkteil 101 anstatt eines Rohranschlusses in Form einer Steckmuffe einen Rohranschluss in Form eines Flanschanschlusses 111 auf. An diesen Flanschanschluss 111 ist ein Rohr mit einem Flanschende anschliessbar. Der Rest entspricht dem ersten Ausführungsbeispiel.

### Drittes Ausführungsbeispiel - Figur 8

Bei diesem dritten Ausführungsbeispiel weist das Gelenkteil 201 anstatt eines Rohranschlusses in Form einer Steckmuffe einen Rohranschluss in Form eines Spitzendes 211 auf. An dieses Spitzende 211 ist ein Rohr mit einer Steckmuffe anschliessbar. Der Rest entspricht dem ersten Ausführungsbeispiel.

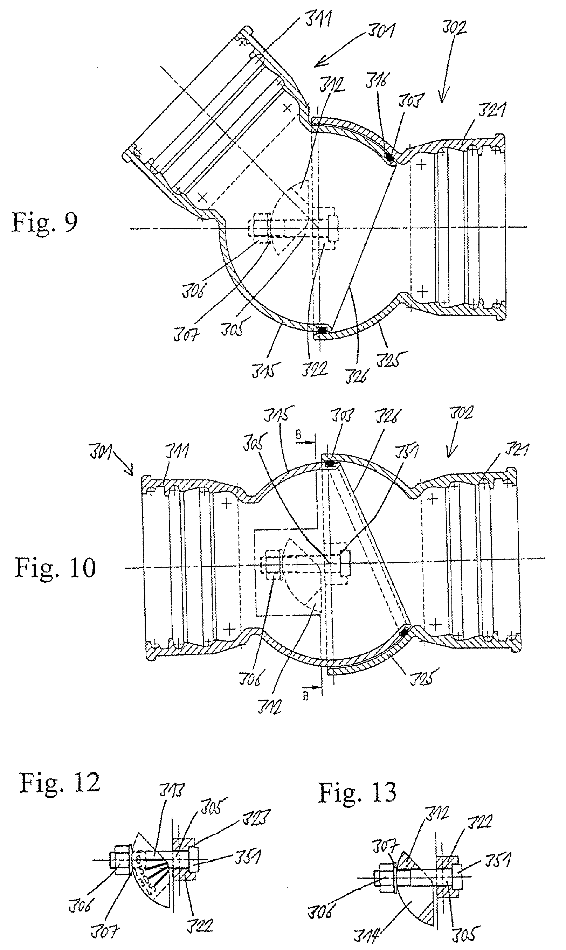

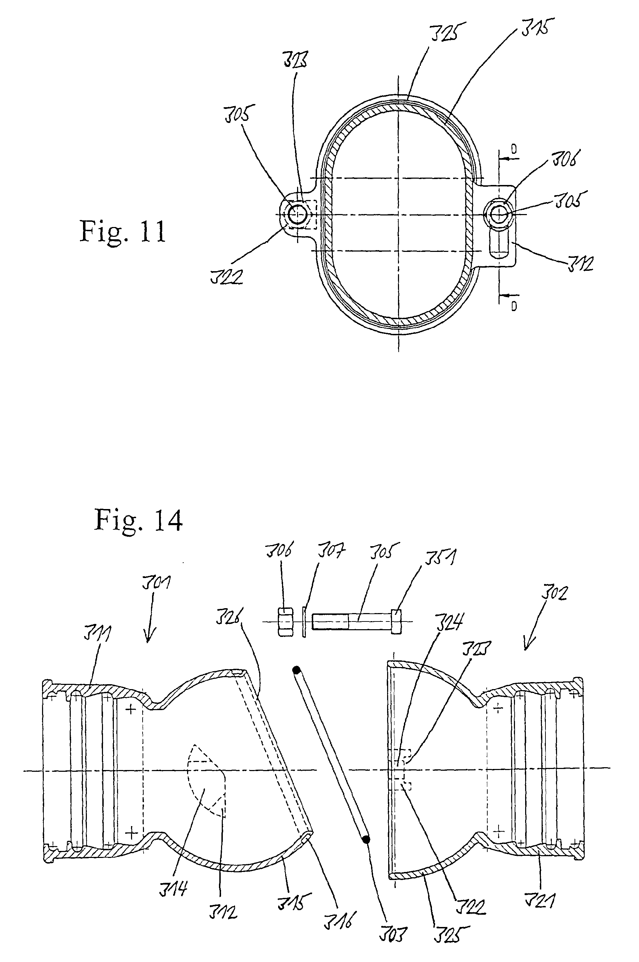

### Viertes Ausführungsbeispiel - Figuren 9 bis 14

Bei diesem vierten Ausführungsbeispiel umfasst das erfindungsgemässe Rohrverbindungselement zwei Gelenkteile 301 und 302 mit ovalen gebogenen Gelenkwandbereichen 315 bzw. 325, die teilweise ineinander gegeneinander drehbar angeordnet sind. Die beiden Gelenkteile 301 und 302 sind mittels zweier symmetrisch angeordneter Schrauben 305 verschraubt, die jeweils eine am Gelenkteil 302 ausgebildete Schraubenhalterung 322 mit einem runden Schraubenloch 324 und eine am Gelenkteil 301 ausgebildete, gebogene Schraubenhalterung 312 mit einem Langloch 314 verbinden. Um das Verschrauben der beiden Gelenkteile 301, 302 mit nur einem Schraubenschlüssel zu ermöglichen, sind an den Schraubenhalterungen 322 Ausnehmungen 323 zur drehfesten Aufnahme des Kopfes 351 der jeweiligen Schraube 305 vorgesehen. Auf die Schrauben 305 geschraubt ist jeweils eine Schraubenmutter 306, wobei zwischen der Schraubenmutter 306 und der jeweiligen gebogenen Schraubenhalterung 312 ein Unterlagsscheibe 307 angeordnet ist. Mit Vorteil werden die Schraubenmuttern 306 nicht voll angezogen, so dass die Schrauben 305 bezüglich den gebogenen Schraubenhalterungen 312 beweglich bleiben. So können die Gelenkteile 301, 302 jederzeit gegeneinander gedreht werden, wobei dann die Schrauben 305 und die entsprechenden langlochartigen, gebogenen Schraubenhalterungen 312 ebenfalls gegeneinander gedreht werden.

Zur Erleichterung der Installation der Rohre und des Rohrverbindungselements vor Ort ist mindestens eine der gebogenen Schraubenhalterungen 312 mit einer Skala 313 versehen, auf der die Längsachse der entsprechenden Schraube 305 den Drehwinkel anzeigt.

An den beiden Gelenkteilen 301, 302 ist jeweils ein Rohranschluss 311 bzw. 321 in Form einer Steckmuffe angeordnet. In diese Steckmuffen 311, 321 ist jeweils ein Spitzende eines Rohres steckbar, wobei im allgemeinen zwischen Steckmuffe 311, 321 und Spitzende ringförmige Dicht- und Halteelemente angeordnet werden. Zwei Rohre können so dicht an das Rohrverbindungselement angeschlossen werden.

Zur Abdichtung des Übergangs vom einen Gelenkteil 301, 302 zum anderen nach aussen ist zwischen den ovalen gebogenen Gelenkwandbereichen 315, 325 der beiden Gelenkteile 301, 302 ein Dichtring 303, vorzugsweise aus Kautschuk, vorhanden, der um den gebogenen Gelenkwandbereich 315 des inneren Gelenkteils 301 herum in einer Ringnut 316 dieses gebogenen Gelenkwandbereichs 315 gelagert ist. Der Dichtring 303 gewährleistet die Dichtheit des Rohrverbindungselements in jeder möglichen Drehstellung der beiden Gelenkteile 301, 302.

Um die Dichtheit und einen ausreichenden Flussquerschnitt des Rohrverbindungselements in jeder Drehstellung sicherstellen zu können, werden die Drehmöglichkeiten der Gelenkteile 301, 302 eingeschränkt. Hierzu dient bei diesem Ausführungsbeispiel die ovale Ausbildung der gebogenen Gelenkwandbereiche 315, 325, welche eine seitliches gegeneinander Drehen der beiden Gelenkteile 301, 302 verhindert.

Der maximale Drehwinkel der Gelenkteile 301, 302 ist beschränkt durch das Anschlagen des Rohranschlusses 311 des Gelenkteils 301 am gebogenen Gelenkwandbereich 325 des Gelenkteils 302. In Fig. 9 ist der maximale Drehwinkel von 45° dargestellt, während der Drehwinkel bei der in Fig. 10 dargestellten Drehstellung 0° beträgt.

Der Gelenkteil 301 weist eine dem Rohranschluss 321 des Gelenkteils 302 zugewandte Öffnung 326 auf, die derart ausgebildet ist, dass in jeder möglichen Drehstellung jeweils der ganze Öffnungsquerschnitt des Rohranschlusses 321 offen ist und gleichzeitig die Dichtheit des Rohrverbindungselements gewährleistet ist.

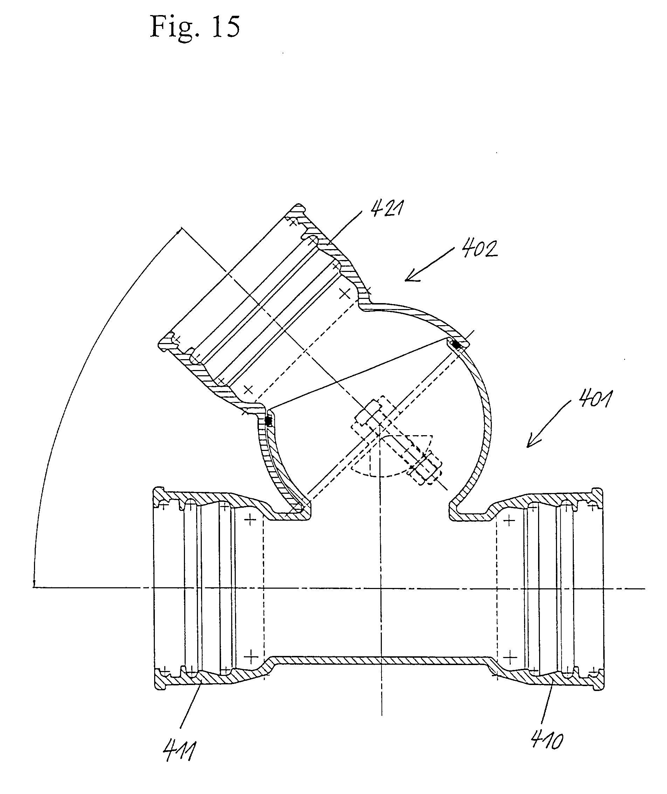

### Fünftes Ausführungsbeispiel - Figur 15

Bei diesem fünften Ausführungsbeispiel weist das Rohrverbindungselement einen Gelenkteil 401 mit zwei Rohranschlüssen 410 und 411 und einen Gelenkteil 402 mit einem Rohranschluss 421 auf. Im weiteren gilt entsprechend das zum vierten Ausführungsbeispiel Gesagte.

Zu den vorbeschriebenen Rohrverbindungselementen sind weitere konstruktive Variationen realisierbar. Hier ausdrücklich erwähnt seien noch:
- Die gebogenen Gelenkwandbereiche müssen nicht unbedingt oval oder sphärisch sein. Denkbar sind theoretisch beliebige Formen, die ein Drehen in einer Richtung erlauben.
   So sind beispielsweise gebogene Gelenkwandbereiche mit bogenförmigen Kanten ebenfalls möglich.
- Die Nut zur Führung der Feder für die Einschränkung der Drehrichtung kann beispielsweise auch an einem der beiden Gelenkteile angeordnet sein. Die Feder ist dann entsprechend am anderen Gelenkteil oder am Befestigungsteil angebracht.
- Für die Ausbildung der Rohranschlüsse sind prinzipiell alle bekannten Rohranschlüsse in beliebigen Kombinationen denkbar.

## Patentansprüche

1. Rohrverbindungselement mit mindestens zwei Rohranschlüssen (11, 21; 111; 211; 311, 321; 410, 411, 421), **dadurch gekennzeichnet, dass** es zwei Gelenkteile (1, 2; 101; 201; 301, 302; 401, 402) mit jeweils einem gebogenen Gelenkwandbereich (15, 25; 315, 325) aufweist und an jedem Gelenkteil (1, 2; 101; 201; 301, 302; 401, 402) mindestens einer der Rohranschlüsse (11, 21; 111; 211; 311, 321; 410, 411, 421) angeordnet ist, wobei der gebogene Gelenkwandbereich (15, 25; 315, 325) des einen Gelenkteils (1, 2; 101; 201; 301, 302; 401, 402) und der gebogene Gelenkwandbereich (15, 25; 315, 325) des anderen Gelenkteils (1, 2; 101; 201; 301, 302; 401, 402) teilweise ineinander gegeneinander drehbar angeordnet sind und zwischen ihnen eine Dichtung (3; 303) vorhanden ist, die den Übergang vom einen Gelenkteil (1, 2; 101; 201; 301, 302; 401, 402) zum anderen nach aussen abdichtet.

2. Rohrverbindungselement nach Anspruch 1, **dadurch gekennzeichnet, dass** die beiden Gelenkteile (301, 302; 401, 402) drehbar miteinander verbunden, vorzugsweise verschraubt, sind.

3. Rohrverbindungselement nach Anspruch 1, **dadurch gekennzeichnet, dass** das eine Gelenkteil (1; 101; 201) zwischen dem anderen Gelenkteil (2) und einem Befestigungsteil (4) drehbar gehalten ist, wobei vorzugsweise das Befestigungsteil (4) mit einem der beiden Gelenkteile (2) fest verbunden, beispielsweise verschraubt, ist.

4. Rohrverbindungselement nach einem der Ansprüche 1 bis 3, **dadurch gekennzeichnet, dass** die gebogenen Gelenkwandbereiche (315, 325) der beiden Gelenkteile (301, 302; 401, 402) derart ausgebildet sind, dass sie ein gegeneinander Drehen der beiden Gelenkteile (301, 302) nur in einer Richtung und ihrer Gegenrichtung zulassen.

5. Rohrverbindungselement nach einem der Ansprüche 1 bis 3, **dadurch gekennzeichnet, dass** es Mittel (12, 42) aufweist, die ein gegeneinander Drehen der beiden Gelenkteile (1, 2; 101; 201) nur in einer Richtung und ihrer Gegenrichtung zulassen, wobei diese Mittel vorzugsweise eine Nut (42) und eine Feder (12) umfassen, wobei die Nut (42) am einen Gelenkteil oder am Befestigungsteil (4) und die Feder (12) am anderen Gelenkteil (1; 101; 201) oder am Befestigungsteil angeordnet ist und die Feder (12) in die Nut (42) eingreift.

6. Rohrverbindungselement nach einem der Ansprüche 1 bis 5, **dadurch gekennzeichnet, dass** die beiden Gelenkteile (1, 2; 101; 201; 301, 302; 401, 402) derart ausgebildet sind, dass in jeder möglichen Drehstellung jeweils der ganze Öffnungsquerschnitt der mindestens zwei Rohranschlüsse (11, 21; 111; 211; 311, 321; 410, 411, 421) offen ist.

7. Rohrverbindungselement nach einem der Ansprüche 1 bis 6, **dadurch gekennzeichnet, dass** die Dichtung ein Dichtring (3; 303), vorzugsweise aus Kautschuk, ist, der um den gebogenen Gelenkwandbereich (15; 315) des einen Gelenkteils (1; 101; 201; 301; 401) herum in einer Ringnut (23; 316) des gebogenen Gelenkwandbereichs (25; 315) eines der beiden Gelenkteile (2; 301; 401) gelagert ist.

8. Rohrverbindungselement nach einem der Ansprüche 1 bis 7, **dadurch gekennzeichnet, dass** an einem der beiden Gelenkteile (1; 101; 201; 301; 401) oder gegebenenfalls dem Befestigungsteil eine Skala (13; 313) angebracht ist, auf der der Winkel der Drehung des anderen Gelenkteils (2; 302; 402) ablesbar ist.

9. Rohrverbindungselement nach einem der Ansprüche 1 bis 8, **dadurch gekennzeichnet, dass** mindestens einer der Rohranschlüsse als Steckmuffe (11, 21; 311, 321; 410, 411, 421), als Spitzende (211) oder als Flanschanschluss (111) ausgebildet ist.

10. Rohrverbindungselement nach einem der Ansprüche 1 bis 9, **dadurch gekennzeichnet, dass** die beiden Gelenkteile (1, 2; 101; 201; 301, 302; 401, 402) so ausgebildet und teilweise ineinander angeordnet sind, dass sie um mindestens 30°, vorzugsweise mindestens 45°, gegeneinander drehbar sind.
